Europäisches Patentamt

European Patent Office

Office européen des brevets

(19)

(11) **EP 1 375 027 A2**

(12) **EUROPÄISCHE PATENTANMELDUNG**

(43) Veröffentlichungstag:
**02.01.2004  Patentblatt 2004/01**

(51) Int Cl.⁷: **B22C 1/02**, B22C 9/04,
C04B 7/147, C04B 7/02,
C04B 28/04

(21) Anmeldenummer: 03013640.2

(22) Anmeldetag: **04.04.2002**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **04.04.2001  DE 10116849**

(62) Dokumentnummer(n) der früheren Anmeldung(en)
nach Art. 76 EPÜ:
**02745215.0 / 1 341 626**

(71) Anmelder: **Dyckerhoff AG
65203 Wiesbaden (DE)**

(72) Erfinder:
• **Mitkova, Darina
55276 Oppenheim (DE)**
• **Schneider, Günter
65375 Oestrich-Winkel (DE)**

(74) Vertreter: **Solf, Alexander, Dr.
Patentanwälte
Dr. Solf & Zapf
Candidplatz 15
81543 München (DE)**

Bemerkungen:
Diese Anmeldung ist am 16 - 06 - 2003 als
Teilanmeldung zu der unter INID-Kode 62
erwähnten Anmeldung eingereicht worden.

(54) **Verwendung einer Masse aus Wasser und einer Bindemittelmischung zur Herstellung feuerfester Produkte**

(57)    Die Erfindung betrifft die Verwendung von Massen aus Wasser und einer eine hydraulische Bindemittelkomponente enthaltenden Bindemittelmischung im Feuerfestbereich als feuerfester Zement, feuerfester Mörtel, feuerfester Beton, feuerfeste Reparatur-, Spritz- oder Stampfmasse, wobei

a) eine sulfatträgerfreie, Tricalciumaluminat enthaltende Bindemittelkomponente und

b) ein erstarrungs- und erhärtungsregelndes Zusatzmittel, das Calciumcarboaluminate als früheste Hydratphase auf der Oberfläche des Tricaiciumaluminats bildet,
verwendet werden.

EP 1 375 027 A2

**Beschreibung**

Die Erfindung betrifft die Verwendung einer Masse aus Wasser und einer Bindemittelmischung zur Herstellung feuerfester Produkte.

Es ist insbesondere bei einem Feinstausschmelzverfahren im Metallguss bekannt, feuerfeste Gießformen dadurch herzustellen, dass eine Einbettungsmasse, ein Formsand oder Ähnliches in eine Form eingefüllt werden und dabei ein Modell des zu formenden Gegenstands umgeben. Ferner ist es auch bekannt, ein Modell in eine Formmasse oder einen Formsand einzudrücken, dann zu entfernen und den entsprechenden Abdruck mit Metall aufzufüllen und dieses anschließend auszuformen.

Für den Präzisionsguss wird insbesondere das Wachsausschmelzverfahren angewandt. Beim Wachsausschmelzverfahren wird für jedes zu produzierende Gussteil ein Wachsmodell benötigt. Dieses Wachsmodell wird mit einer flüssigen Einbettungsmasse insbesondere aus Gips überzogen. Anschließend wird um das mit dem Gips überzogene Wachsmodell ein fester Behälter gebaut und mit einer flüssigen Einbettungsmasse, insbesondere ebenfalls Gips, aufgefüllt. Die durchgetrocknete Gießmasse wird im Ofen erhitzt bis das Wachs in ihrem Innern ausschmilzt, verdampft und verbrennt. Im Behälter ist nun ein Hohlkörper entstanden, der dem Modell entspricht.

Anschließend kann der Metallguss durchgeführt werden. Hierfür wird die flüssige Metalllegierung in den Hohlraum in der Gießmasse eingegossen. Anschließend wird das Gussstück langsam auskühlen gelassen. Nach dem Erstarren der Metalllegierung wird der Mantel aus der erhärteten Einbettungsmasse zerschlagen. Die Fehler durch Luftblasen in der Einbettungsmasse und andere Unebenheiten werden durch sogenanntes Ziselieren beseitigt. Beim Patinieren wirken verschiedene Chemikalien auf die Metalloberfläche ein, um beispielsweise einen Antikeffekt zu erzielen. Wie bereits ausgeführt, werden üblicherweise Gipsformen hergestellt. Gipsformen enthalten bis zu 20 M-% Kristallwasser auch nach dem Austreiben des Wachses. Es darf deshalb in diese Formen zunächst kein heißes Metall eingegossen werden. Die Gipsformen müssen vor dem Metallguss getrocknet und entwässert werden. Hierbei finden die für den Gips typischen Phasenumwandlungen statt, welche jedoch unerwünschte Gefügeänderungen herbeiführen können. Diese verursachen insbesondere Schwindung und damit die Bildung von Schwindrissen und, nach dem Abkühlen, Kühlrissen. Ferner wird die Porosität und die Gasdurchlässigkeit erhöht. Darüber hinaus können bestimmte Metalle (Magnesium) auch chemische Reaktionen im Gips verursachen, was zusätzlich unerwünscht ist. Eine weiterer Nachteil bei der Verwendung von Gips ist, dass diese Gipsmassen üblicherweise mit einem Vakuumrührgerät hergestellt werden, um die Gipsmasse vor dem Eingießen zu entgasen.

Einbettungs- bzw. Formmassen auf Basis hydraulischer Bindemittel wie Portlandzementformen sind nicht temperaturstabil und überstehen insbesondere den Temperaturschock beim Eingießen des flüssigen Metalls kaum oder nur beschädigt.

Widerstandsfähigkeit gegen hohe Temperaturen und Temperaturschock werden durch Mörtel mit Tonerdeschmelzzement erzielt, der der typische Zement für die Feuerfestindustrie ist. Tonerdeschmelzzement ist ein in einem komplizierten Herstellungsprozess erzeugtes Produkt. Außerdem ist die Steuerbarkeit des Erstarrens und Erhärtens schwierig.

Aufgabe der Erfindung ist es, Massen für die Verwendung als Feuerfestprodukte zu schaffen, in denen einfach herstellbare hydraulische Bindemittel verwendet sind und die eine lange steuerbare Verarbeitungszeit sowie eine einfache Steuerung des Erstarrens und Erhärtens, eine hohe Temperaturbeständigkeit und eine einfache und schnelle Verarbeitung ermöglichen.

Die Aufgabe wird durch die Merkmale des Anspruchs 1 gelöst.

Weitere vorteilhafte Ausbildungen der Erfindung werden in den abhängigen Unteransprüchen gekennzeichnet.

Eine erfindungsgemäß verwendete Masse aus einer Bindemittelmischung für Feuerfestprodukte weist ein hydraulisches Bindemittel als Binderkomponente der Bestandteile der Bindemittelmischung auf, wobei dieses Bindemittel ein sulfatträgerfreies hydraulisches Bindemittel und insbesondere ein sulfatträgerfreies hydraulisches Feinstbindemittel ist. Als sulfatträgerfreies hydraulisches Bindemittel wird fein- oder feinstgemahlener Portlandzementklinker verwendet. Ein Feuerfestprodukt aus einer Masse unter Verwendung eines sulfatträgerfreien hydraulischen Bindemittels, insbesondere unter Verwendung eines sulfatträgerfrei vermahlenen Portlandzementklinkers, erreicht eine hinreichende Temperaturbeständigkeit, eine sehr gute Temperaturwechselbeständigkeit (Thermoschock) und zudem eine sehr gute Langzeittemperaturbeständigkeit. Zudem kann eine Bindemittelmischung bzw. eine Masse mit dem sulfatträgerfreien hydraulischen Bindemittel über einen sehr weiten Bereich sehr feinfühlig bezüglich des Erstarrungsverlaufs, des Erhärtungsverlaufs, sowie der Viskosität eingestellt werden.

Die erfindungsgemäß verwendete Masse kann grundsätzlich bei allen Formgussverfahren verwendet werden, bei denen mit einer verlorenen Form gearbeitet wird, insbesondere beim Wachsausschmelzverfahren und beim Formen mit Halbformen. Bei entsprechend stabiler Ausgestaltung des Formkastens sind aufgrund der hohen Festigkeit der erhärteten Formmasse sogar Druckgießverfahren mit mäßigem Druck realisierbar. Bei Formgussverfahren, bei denen ein Formkörper in einer Form mit zwei Formhälften gegossen wird und anschließend dadurch entnommen wird, dass die beiden Formhälften auseinander gefahren werden, ist es durch die hohe Stabilität und Festigkeit der erhärteten Formmasse auch möglich, die Form mehrere Male hintereinander insbesondere für die Herstellung von Kleinserien zu verwenden. Ferner kann Einfluss auf die Werkstoffeigenschaften des Formstücks dadurch genommen werden, dass sich bei der Formmasse die Wärmeleitfähigkeit der Masse voreinstellen lässt, so dass die Abkühlraten des eingegossenen Metalls einstellbar und insbesondere bedeutend höher als bei bekannten Formmassen sind.

Das verwendete sulfatträgerfreie Bindemittel ist beispielsweise Portlandzementklinkermehl. Portlandzementklinker ist das ofenfallende Gut, welches den Zementdrehrohrofen verlässt. Üblicherweise wird dieses ofenfallende Gut zusammen mit sogenannten Sulfatträgern wie Gips oder Anhydrit oder Gemengen daraus zu Portlandzement vermahlen, anschließend gesichtet und dann gegebenenfalls abgepackt. Das erfindungsgemäß verwendete sulfatträgerfreie hydraulische Bindemittel ist ein ohne Sul-fatträgerzusatz vermahlener Portlandzementklinker. Der Sulfatträgerzusatz hat bei den üblicherweise hergestellten Zementen die Aufgabe, das Erstarren durch die Bildung des Minerals Ettringit an der Oberfläche des Tricalciumaluminats (C$_3$A)zu regeln.

Insbesondere können auch Kombinationen aus Portlandzementklinkermehlen und/oder latenthydraulischen Stoffen wie Hüttensandmehlen und/oder puzzolanischen Stoffen, wie Trass sowie Mikrosilika, Metakaolinit, unbehandelte oder getemperte Zeolithe, und/oder inerte, feingemahlene Gesteinsmehle, wie Kalksteinmehl und/oder hydraulische Kalke und/oder Calciumsilikate und/oder Calciumaluminate oder jede Kombination aus diesen Bestandteilen verwendet werden. Die Feinheit der verwendeten Klinkermehle bzw. der verwendeten Bindemittelbestandteile reicht von normaler Zementfeinheit bis zu höchsten Feinheiten. Zur Regelung der Frühfestigkeit, des Erstarrungsverlaufs und der Endfestigkeit kann die Bindemittelkomponente auch aus Fraktionen unterschiedlicher Feinheit zusammengesetzt sein. Darüber hinaus können auch die aufgezählten Einzelbestandteile der Bindemittelkomponente je unterschiedliche Feinheiten aufweisen.

Vorzugsweise weist die Bindemittelkomponente die Feinheit von Feinstzementen auf. Feinstzemente sind sehr feinkörnige hydraulische Bindemittel, insbesondere mit stetig und eng abgestuften Kornverteilungen und einer Begrenzung des Größtkorns. Die Eigenschaften und die übliche Verwendung von Feinstzementen ist zum Beispiel in einem vorläufigen Merkblatt für Einpressarbeiten mit Feinstbindemitteln in Lockergesteinen (Bautechnik 70, [1993], Heft 9, Ernst & Sohn, Seiten 550 bis 560, und ZTV-RISS 93, Verkehrsblatt-Dokument B 5237, Verkehrsblatt-Verlag) dargelegt.

Die Bestandteile der Mischung sind sehr genau und reproduzierbar aufeinander abgestimmt, wobei vorzugsweise alle wesentlichen Bestandteile eine Kornverteilung d95 ≤ 24 µm, vorzugsweise d95 ≤ 16 µm, und d50 ≤ 7 µm, vorzugsweise d50 ≤ 5 µm, und vorzugsweise ein Verhältnis von d50 zu d95 = 0,33 ± 0,04 aufweisen (d95 - Korndurchmesser bei 95 Gew.-% des Siebdurchgangs; d50 - Korndurchmesser bei 50 Gew.-% des Siebdurchgangs). Insbesondere wenn diese Bedingungen eingehalten werden, ist es möglich, den Einfluß eines Zusatzmittels zu optimieren.

Vorteilhafterweise wird die Kornverteilung des trockenen Gemenges entsprechend einer modifizierten Gaudin-Schumann-Funktion, die auch als Dinger-Funk-Funktion bekannt ist, eingestellt (Funk, James G.; Dinger, Dennis R.; Predictive process control of crowded particulate suspensions; Cluver Academic Publishers Group, Distribution Center 3300AH Dordrecht, NL). In der Dinger-Funk-Funktion wird ein Exponent n<0,2 eingestellt, wobei auch negative Werte möglich sind. Hierdurch gelingt es, eine erhärtete Masse mit maximal dichtem Gefüge zu erzeugen.

Die Funktion lautet:

$$F(d) = \frac{D^n - D_s{}^n}{D_L{}^n - D_s{}^n}$$

wobei

D = Partikelgröße
D$_S$ = kleinste Partikelgröße
D$_L$ = größte Partikelgröße
n = Verteilungsmodul

sind.

Die Bindemittelmischung bzw. die Einbettungs- bzw. Formmasse weist beispielsweise eine sulfatträgerfreie Bindemittelkomponente sowie ein sulfonatgruppenfreies Fließmittel als Zusatzmittel auf. Das sulfonatgruppenfreie Fließmittel, insbesondere Polycarboxylate wirken innerhalb einer kurzen Zeitspanne, beispielsweise 2 bis 10 Minuten, auch verzögernd bezüglich der Früherstarrung der sulfatfreien Bindemittelkomponente. Dies wird darauf zurückgeführt, dass die sulfonatgruppenfreien Fließmittel, insbesondere Polycarboxylate offenbar kurzfristig unerwünschtes Kristallwachstum behindern.

Die verwendeten modifizierten Polycarboxylate sind beispielsweise in der DE 196 53 524 A1 beschrieben. Es handelt sich meist um homo- oder copolymere carboxylgruppenhaltige Monomere, deren Seitenketten modifiziert sind. Ferner sind als sulfonatgruppenfreie Fließmittel Stoffe aus der Gruppe der Polyasparaginsäuren und/oder Polyacrylate geeignet.

Zudem kann die Bindemittelzusammensetzung gegebenenfalls Beschleuniger enthalten. Geeignete Beschleuniger sind beispielsweise Alkalicarbonate oder Alkalibicarbonate sowie Calciumnitrat, Alkalisilikate, Alkalihydroxide, Erdalkalihydroxide, Chloride mehrwertiger Kationen (z.B. Calciumchlorid), Aminverbindungen sowie Calciumformiat und andere bekannte Beschleuniger sowie selbstverständlich Mischungen aus den genannten Beschleunigern.

Die Beschleuniger werden insbesondere eingesetzt, wenn wegen einer nötigen Verflüssigung bei niedrigem Wasserbindemittelwert viel Polycarboxylat zugesetzt wird. Mit den Beschleunigern kann die Verzögerung eingestellt werden, insbesondere, wenn diese über ein gewünschtes Maß hinausgeht.

Das sulfonatgruppenfreie Fließmittel, insbesondere Polycarboxylat wird insbesondere in Mengen von 0,25 bis 2 Masse-% bezogen auf das Bindemittel zugesetzt. Hierdurch können beispielsweise Verzögerungen von 2 bis 10 Minuten erzielt werden bei einer sehr guten Verflüssigung. Durch die starke Verflüssigungswirkung kann die Menge des zugesetzten Wassers und damit die Porosität des Bindemittelleims bzw. des erhärteten Bindemittelsteins herabgesetzt werden, wodurch die Festigkeit steigt.

Die Komponenten der Bindemittelmischung, also die Bindemittelkomponente, der oder die sulfonatgruppenfreien Verflüssiger sowie ggf. Beschleuniger und weitere bekannte Zusatzstoffe und/oder Zusatzmittel, wie Entschäumer oder Zuschlagstoffe können, sofern sie in trockenem Zustand vorliegen, vorgemischt als Werktrockenmischung vorgehalten werden, welche vor der Verwendung lediglich noch mit Wasser angemischt werden muss.

Ferner können auch Stabilisierer in der Bindemittelmischung verwendet werden.

Stabilisierer aus der Gruppe der mikrobiellen Polysaccharide werden bevorzugt verwendet. Dies sind synthetische Biopolymere von denen insbesondere Xanthan und Welan für die erfindungsgemäßen Zwecke geeignet sind.

Besonders geeignete Biopolymere sind z.B. in einem Velco Prospekt "Xanthan Gum", Seite 1 bis 24, beschrieben und insbesondere auf Seite 1, Spalte "Microbial polysaccharides", genannt. Es handelt sich um Dextran, Gellan gum, Rhamsan gum, Welan gum und Xanthan gum.

Die Verwendung eines sulfatträgerfreien Bindemittels bewirkt zudem, dass die Massen chromatfrei sind, weil die Chromkomponente im Klinkerfeinstmehl durch Hydratphasen eingebunden wird.

Darüber hinaus lassen sich in vorteilhafter Weise auch Zusatzmittelkombinationen der vorstehend bzw. nachstehend beschriebenen Zusatzmittel verwenden.

Eine hydraulische Bindemittelzusammensetzung für die erfindungsgemäße Verwendung kann hierdurch bezüglich der Verarbeitbarkeit, des Beginns des Erstarrens, der Höhe der Frühfestigkeit, der Höhe der Endfestigkeit und Dauerhaftigkeit der Endfestigkeit auf einfache Weise z.B. werkseitig auf die jeweils gestellte Anforderung genau vorbereitet eingestellt werden.

Die Bindemittelzusammensetzung kann alternativ oder zudem einen Erstarrungsverzögerer, gegebenenfalls einen plastifizierenden Erstarrungsverzögerer enthalten.

Verwendet werden insbesondere Alkaligluconate in Verbindung mit Alkalicarbonaten und/oder Alkalibicarbonaten zur feinfühligen Aussteuerung des Erstarrungsverhaltens. Des weiteren werden insbesondere die gebräuchlichen plastifizierenden sulfonatgruppenhaltigen Erstarrungsverzögerer als Zusatzmittel verwendet. Dies sind beispielsweise Ligninsulfonate, Sulfonseifen, Sulfonsäuren, Alkylbenzolsulfonate, Naphthalinsulfonate und sulfonierte Melaminformaldehydkondensate. Diese können aber auch insbesondere teilweise durch andere sulfonatgruppenfreie Verzögerer ersetzt werden. Zum Beispiel sind teilweise verwendbar: Celluloseether (Methyl-, Ethyl- und/oder Propylether), Mono- und/oder Polysaccharide (Fructose, Glucose), Acrylsäuren und deren Salze, Oxycarbonsäuren und deren Salze (z.B. Zitronensäure), Phosphorsäuren und deren Salze, Borsäure und deren Salze, Alkylamide, Styrol-Butadien.

Insbesondere die Verwendung der Polycarboxylate zusammen mit an sich bekannten sulfonatgruppenhaltigen Verzögerern, die gleichzeitig auch als Verflüssiger wirken, in Kombination mit an sich bekannten Beschleunigern erbringt die Wirkung, dass die sulfonatgruppenhaltigen Mittel lediglich bezüglich der Verzögerung wirksam sind und die verflüssigende Wirkung der Polycarboxylate nicht beeinflussen. Die sulfonathaltigen Verflüssiger können ohne Beachtung sehr genauer Grenzwerte zugegeben werden, weil es ausreicht, zumindest die Menge zuzugeben, die für eine vorbestimmte Bindemittelmenge zum Verzögern erforderlich ist. Größere Mengen stören weder den Verzögerungsprozeß noch die verflüssigende Wirkung der Polycarboxylate.

Ferner ermöglicht die Verwendung der genannten Zusatzmittelkombination nicht nur das sehr genaue Steuern der oben genannten Eigenschaften, sondern gewährleistet, dass auch ungewöhnlich hohe Frühfestigkeiten und dauerhafte höhere Endfestigkeiten erzielbar sind. Eine die Verwendung störende klebrig gummiartige Konsistenz bildet sich trotz Anwesenheit sulfonatgruppenhaltiger Verzögerer und üblicher Beschleuniger in überraschender Weise nicht mehr aus.

Selbstverständlich liegt es im Rahmen der Erfindung, weitere Zusatzmittel, die die Steuerung der oben genannten Eigenschaften nicht beeinträchtigen und anderen Eigenschaftsbeeinflussungen dienen,- beispielsweise Mahlhilfsmittel, zu verwenden.

Die weitergehende Steuerung der oben genannten Eigenschaften durch bestimmte Kornfraktionen und/oder Kornbänder kann z.B. mit folgenden Klinkermehlfraktionen aus ausgesichteten Feinstmehlen erfolgen:

$d_{95} \leq 6,5$ µm
$d_{95} \leq 9$ µm
$d_{95} \leq 16$ um
$d_{95} \leq 24$ µm oder

beliebige Mischungen selektiver Feinstmehle.

Insbesondere durch die Verwendung selektiver Feinstmehlfraktionen kann außerdem Zusatzmittel eingespart oder die Verarbeitbarkeit, die Frühfestigkeit und/oder die Endfestigkeit gesteuert, z.B. gesteigert werden. Durch eine Verwendung bestimmter Kornfraktionen oder Kornbänder können auch in anderen hydraulischen Bindemittelzusammensetzungen Zusatzmittel eingespart und bei bestimmter Zusatzmittelmenge und -art die Verarbeitbarkeit, die Frühfestigkeit und/oder die Endfestigkeit gesteuert werden.

Der Verflüssiger (Fließmittel) kann werksseitig in einer Werktrockenmischung zugesetzt in der Bindemittelmischung enthalten sein.

Zur Erstarrungs- und Erhärtungsregelung können zudem auch Ligninsulfonate in Verbindung mit Alkalicarbonaten eingesetzt werden. Als Alkalicarbonate werden Natrium und Kaliumcarbonat in unterschiedlichen Mischungsverhältnissen je nach Aufgabenstellung eingesetzt.

Es hat sich überraschenderweise herausgestellt, dass durch die Variation des Verhältnisses von Kaliumcarbonat zu Natriumcarbonat die Frühfestigkeit der Bindemittelpaste, also der Einbettungsmasse in einem weitem Bereich variiert werden kann. Die Festigkeitsentwicklung der angemachten Bindemittelmischung kann somit zielgerichtet durch eine entsprechende Mischung aus Natrium- und Kaliumcarbonat schon werkseitig eingestellt werden, wobei die Festigkeitsentwicklung insbesondere im Bereich von 2 bis 24 h durch das Verhältnis der Alkalicarbonate steuerbar ist. Hierbei wird, bei einer vorgegebenen Mischung bzw. bei einer vorgegebenen Bindemittelkomponente und bei einem vorgegebenen Bereich der Frühfestigkeit zur Steuerung des Frühfestigkeitsverlaufs und der Frühfestigkeit das $Na_2O$-Äquivalent - abgestimmt auf diese Parameter - konstant gehalten und lediglich das Verhältnis von $K_2CO_3/(K_2CO_3 + Na_2CO_3)$ innerhalb des konstanten $Na_2O$-Äquivalents verändert. Zusätzlich ist die Verarbeitungszeit durch weitere Zusatzmittel wie Ligninsulfonat innerhalb begrenzter Zeitfenster ohne nachhaltige Festigkeitsverluste zu frühen Zeitpunkten einstellbar. Insofern wird eine weite Variabilität bezüglich des Beginns der Festigkeit und der Höhe der Festigkeit der Paste geschaffen. Eine weitere Einflußmöglichkeit bezüglich der Festigkeitsentwicklung und des Beginns der Festigkeitsentwicklung liegt in der Feinheit der verwendeten Bindemittelkomponente. Darüberhinaus können diese Parameter auch dadurch gesteuert werden, dass der Bindemittelbestandteil, in diesem Fall das Klinkermehl, aus unterschiedlichen Kornfraktionen jeweils individualisiert für den Anwendungsfall zusammengemischt wird.

Als Zusatzstoffe bzw. Zuschlagstoffe zu dem sulfatträgerfreien hydraulischen Bindemittel kommen Quarzsand (bis 2 mm Korngröße), Schamottemehl, Sillimanitmehl, Disthenmehl, Metakaolinit und Hüttenmehl in Frage, wobei diese Bestandteile einzeln oder als Mischung im Verhältnis 1:1 bis 1:3 dem Bindemittel zugeschlagen werden. Insbesondere mit Schamotte, Sillimanit, Disthen und Metakaolinit lassen sich die Temperaturbeständigkeiten deutlich erhöhen.

Vorzugsweise wird die Wärmeleitfähigkeit der Masse eingestellt. Es ist bekannt, dass die Abkühlgeschwindigkeit eines metallischen Werkstücks einen Einfluss auf dessen kristalline Struktur und damit die Werkstoffeigenschaften hat. Mit einer steuerbaren, voreinstellbaren Wärmeleitfähigkeit der Einbettungsmasse gelingt es, die Werkstoffeigenschaften gezielt zu beeinflussen.

Die Wärmeleitfähigkeit kann über die Kornverteilung des trockenen Gemenges und die damit steuerbare Porosität bzw. Packungsdichte eingestellt werden. Dies gelingt insbesondere, wenn die bereits erwähnte Kornverteilung entsprechend einer Dinger-Funk-Funktion zusammengesetzt wird, wobei der Exponent n in der Verteilungsfunktion beispielsweise auf n<0,2 eingestellt wird und insbesondere negativ ist, um eine möglichst hohe Packungsdichte und damit Wärmeleitfähigkeit einzustellen. Die eingestellte Porosität beträgt dabei ≤ 10%.

Die Wärmeleitfähigkeit kann auch oder zusätzlich durch die Art der Zuschläge der Masse beeinflusst werden. Um die Wärmeleitfähigkeit in dieser Weise zu steuern, werden die Zuschläge wie Quarz bzw. Sand oder andere Rückstandsminerale ganz oder teilweise durch anorganische Feststoffe mit wesentlich höherer spezifischer Wärmeleitfähigkeit ersetzt. Hierfür finden insbesonderer Siliciumnitrid, Siliciumcarbid, Nitride, Granate, Sinterkorund und Feldspäte Verwendung.

Ferner kann die Masse zur Erhöhung der Wärmeleitfähigkeit auch Metalle, insbesondere in Form von Kühleisen in Stangen- oder Barrenform, metallische Fasern und/oder Metallgranulate und/oder Metallstäube enthalten. Hierfür können auch entsprechend klassierte Metallabfälle verwendet werden. Vorzugsweise wird hierbei ein Modell zunächst mit einer Schicht einer erfindungsgemäßen Masse mit anorganischen Zuschlägen umhüllt und anschließend eine metallgranulat- oder -staubhaltige Masse aufgebracht. Dies verhindert eine mögliche Reaktion des gegossenen Metalls mit dem Metall in der Masse, sofern eine solche erwartet werden muss. Zusätzlich zu einer Einbettungsmasse mit metallischen Zuschlägen können auch an sich bekannte Kühleisen in die Masse eingebracht werden. Bei diesen Kühleisen handelt es sich um Metallgegenstände in Stangen- bzw. Barrenform, die von der Masse eingebettet werden und aufgrund ihrer hohen Wärmeleitfähigkeit die Wärme aus dem Gussstück gut aufnehmen können. Derartige Kühleisen können auch bei einer Masse mit ausschließlich anorganischen Zuschlägen verwendet werden.

Mit den eine hohe Wärmeleitfähigkeit ermöglichenden Massen mit anorganischen Zuschlägen lassen sich bereits Wärmeleitfähigkeiten einstellen, die deutlich über 0,006 $J \cdot s^{-1} \cdot K^{-1}$ betragen.

Um die Wärmeleitfähigkeit weiter zu beeinflussen und/oder Einfluss auf den Kontakt zwischen Formmasse und Metall zu nehmen, kann die Mischung zudem Kohlenstoff in Form von Ruß und/oder Graphit enthalten. Hierdurch kann die Benetzbarkeit der Oberfläche der Form mit Metall beeinflusst und insbesondere verringert werden. Ferner können in der Masse Reaktionspartner vorhanden sein, die beim Eingießen des Metalls endotherm reagieren und dem System dadurch zusätzlich Wärme entziehen. Dies sind z.B. Mischungen aus Calciumcarbonat und Metakaolinit bzw. Calciumcarbonat und Mikrosilika.

Dadurch, dass die erfindungsgemäß verwendeten Massen betonartig hydraulisch erstarren und erhärten, sind sie völlig wasserbeständig. Hierdurch kann die Form erfindungsgemäß sowohl von außen als auch durch Kanäle wassergefüllt werden. Die Kanäle können - insbesondere bei größeren Formstücken - ebenfalls durch Formwachs oder Ähnliches gebildet und entsprechend im Formkasten eingebaut werden. Beim Ausschmelzen und/oder Ausbrennen des Modells werden die Modelle der Kanäle dann ebenfalls ausgeschmolzen bzw. ausgebrannt. Mit entsprechenden Anschlussstüken, die am Formkasten vorhanden sein können, können diese Kanäle anschließend mit Wasser durchströmt werden.

Durch die beschriebene Beeinflussung der Wärmeleitfähigkeit kann die Struktur des gegossenen Metalls gezielt beeinflusst werden. Da bei Großserien Gussteile in Metallformen hergestellt werden, besitzen sie eine andere Struktur und andere Materialeigenschaften als Prototypen oder Kleinserienteile, die in Gips oder anderen bekannten Formen hergestellt wurden. Durch die Verwendung der Massen können auch Kleinserien oder Prototypen derart hergestellt werden, dass die Materialeigenschaften der Formkörper denen der in Großserie hergestellten sehr nahe kommen. Hierdurch ist es erstmals möglich, die Eignung eines in einer verlorenen Form gegossenen Bauteils schon anhand des Prototyps erheblich leichter abzuschätzen, da der Prototyp dem Großserienteil fast entspricht.

Besonders vorteilhaft ist, der Bindemittelmischung für eine Einbettungs- bzw. Formmasse sogenannte Ausbrennstoffe zuzugeben, welche nach einer thermischen Behandlung, insbesondere nach dem Ausbrennen des Wachses ebenfalls ausgebrannt sind und gezielt Poren bzw. Kanälchen in der erhärteten Masse hinterlassen. Dies ist wichtig, um den im Metall gelösten Wasserstoff oder andere Gase über die Kanäle in die Masse abzuleiten und so einen lunkerfreien Gusskörper zu erhalten. Als Ausbrennstoffe sind insbesondere geeignet Polypropylenfasern (3 bis 20 mm Länge), Dolanitfasern, im Allgemeinen Kunststofffasern, welche bis ca. 200° C ausbrennen, sowie Cellulosefasern und Holzspäne bzw. - mehl. Ferner hat es sich als vorteilhaft erwiesen, Tiermehl bzw. Knochenmehl zuzusetzen, da die enthaltenen Fette und Gewebefasern ebenfalls in hervorragender Weise Poren und Kanälchen beim Ausbrennen erzeugen. Zudem erhöht das verbleibende Phosphat die Feuerfestigkeit in erheblichem Maße.

Bei dem sulfatträgerfreien Bindemittel wird das Erstarren und Erhärten anstelle des Sulfatträgers durch die Zugabe der genannten Zusatzmittel sehr feinfühlig und in weiten Bereichen reguliert. In der Literatur sind Bindemittel dieser Art als anorganische Systeme aus Klinkermehl mit sehr hohen spezifischen Oberflächen, Verflüssigern und Alkalisalzen beschrieben. Der beobachtete Verflüssigungseffekt der Zusätze scheint mit deren Fähigkeit, die Klinkerpartikel in einer wässrigen Suspension effektiv zu dispergieren im Zusammenhang zu stehen. Weil diese Bindemittel keinen Sulfatträger beinhalten, bilden sich auf der Oberfläche des Tricalciumaluminat statt Ettringit (einem Sulfoaluminat mit 32 Wassermolekülen) wasserärmere Calciumkarboaluminate als früheste Hydratphasen.

Die verwendete Einbettungs- bzw. Formmasse auf der Basis von sulffatträgerfreiem Portlandzement widersteht dem Einfluß von erhöhten und hohen Temperaturen besser als die Mörtel aus üblichem Portlandzement.Die Massen weisen eine sehr hohe Langzeitstabilität auf. Möglich sind zudem noch Kombinationen mit Microsilika, welches die Widerstandsfähigkeit gegen hohe Temperaturen noch weiter verbessert. Die Eigenschaften der Kontaktzone zwischen dem Zuschlag und dem sulfatfreien Bindemittel wurden untersucht. Die Kontaktzone erwies sich als sehr kompakt und gewährleistete eine hohe Verbundfestigkeit der Matrix. Der Verbund zwischen Zuschlag und sulfatfreiem Bindemittel in der erfindungsgemäßen Einbettungsbzw. Formmasse ist zweimal höher als die entsprechende Verbundfestigkeit des Zuschlags mit Portlandzement.

Während gipsgebundene Einbettmassen vor dem Wachsausschmelzen vortemperiert werden, z.B. je nach Größe der Form mit Temperatursteigerungen von 40 bis 60° C pro Stunde mit unterschiedlichen Verweilzeiten (2 Stunden bei Temperaturen bis 300°C, 4 Stunden bei Temperaturen von etwa 700° C), ist dies bei den erfindungsgemäß verwendeten Einbettungs- bzw. Formmassen auf Basis der sulfatfreien Bindemittel nicht erforderlich. Das Vortemperieren hängt mit dem hohen gebundenen und ungebundenen Wassergehalt der Gipsmassen zusammen, der beim schnellen Erwärmen zur Rißbildung führt. Das Mischungsverhältnis bei gipsgebundenen Einbettmassen beträgt 100 Teile Pulver auf 38 bis 40 Teile Wasser. Die Verarbeitungszeit der gipsgebundenen Einbettmassen beträgt etwa 10 bis 12 Minuten.

Bei einer aus der erfindungsgemäß verwendeten Einbettungs- bzw. Formmasse hergestellten Form muss vor dem Wachsausschmelzen nicht vortemperiert werden. Die Einbettungs- bzw. Formmassen mit sulfatträgerfreiem Bindemittel werden mit niedrigem Wasserzementwert hergestellt. Weil sich kein Ettringit bildet sind diese Systeme wasserarm. Die Mischungsverhältnisse bei der Verwendung der Bindemittelmischung betragen: Formasse : Wasser = 100:10 bis 100:25. Dabei fließt die erfindungsgemäß verwendete Einbettungs- bzw. Formmasse schnell und leicht in die Form ein, wobei die Erzeugnisse aus dieser Masse überraschend eine porenfreie Oberfläche zeigen, die erheblich glatter ist als die einer vergleichsweise verwendeten Gipsmasse. Die Verarbeitungszeit der Massen beträgt beispielsweise 30 bis 40 Minuten bei 20°, sie ist jedoch für den jeweiligen Anwendungsfall sehr feinfühlig und über einen sehr weiten Bereich von wenigen Minuten bis mehreren Stunden steuerbar. Die Masse ergibt dabei Festigkeiten, die ein Vielfaches über der Festigkeit bekannter Formmassen liegen.

Die erfindungsgemäß verwendete Einbettungs- bzw. Formmasse kann mit Vorteil bei einer Vielzahl von Formgussverfahren angewandt werden. Insbesondere kann die erfindungsgemäß verwendete Masse beim Wachsausschmelzverfahren Anwendung finden, insbesondere bei der Herstellung von einzelnen Gussstücken oder von Kleinserien für den Prototypenbau. Aber auch bei allen anderen Formgussverfahren mit einer verlorenen Form ist die Erfindung mit Vorteil verwendbar. Dabei können alle möglichen Metalle vergossen werden, wobei insbesondere auch Magnesium vergossen werden kann. Magnesium ist in Formmassen für verlorene Formen, insbesondere in Gips, überhaupt nicht vergießbar. Durch die hohe Festigkeit der erfindungsgemäß verwendeten Massen nach dem Erhärten können jedoch auch Formen mit aufeinander zu und voneinander wegfahrbaren Formenhälften hergestellt werden, in denen Kleinserien produziert werden können, da durch die hohe Festigkeit die Formen nicht schon durch einen Einguss zerstört werden. Ferner ist es bei geeigneter Ausgestaltung des Formkastens auch möglich, Gussteile unter Anwendung von mäßigem Druck herzustellen.

Es hat sich herausgestellt, dass sich die erfindungsgemäß verwendeten Massen in hervorragender Weise auch in anderen Feuerfestbereichen als Bindemittel, feuerfester Mörtel und Beton sowie Reparatur und Stampfmassen, insbesondere bei alkalischem Angriff eignen.

Bei den erfindungsgemäß verwendeten Massen ist von Vorteil, dass ein schnelles Arbeiten durch die einstellbare Verarbeitungszeit möglich ist. Ferner fällt als großer Vorteil gegenüber Gipsformen eine Trokkungszeit der erhärteten Formmasse weg. Ferner ergeben erfindungsgemäß verwendete Formmassen eine Form, die eine sehr hohe Festigkeit, insbesondere gegenüber Gipsformen, aufweist. Die erfindungsgemäß verwendeten Formmassen sind nach dem Erhärten hochtemperaturfest, thermoschockbeständig und verfügen über eine einstellbare Wärmeleitfähigkeit. Besonders vorteilhaft gegenüber anderen Formwerkstoffen ist die leichte Entsorgbarkeit, da der Formwerkstoff unter Umweltaspekten unbedenklich ist und in dieser Hinsicht Bauschutt entspricht. Ferner kann der Formwerkstoff - auch wenn er Eisengranulate zur Erhöhung der Wärmeleitfähigkeit enthält - vom Hersteller zurückgenommen und in einfacher Weise im Zementherstellungsprozess wieder verwendet werden. Es hat sich zudem herausgestellt, dass sich die Formmassen leicht und insbesondere erheblich besser als Gips durch Sandstrahlen vom Formstück entfernen lassen.

**Patentansprüche**

1. Verwendung von Massen aus Wasser und einer eine hydraulische Bindemittelkomponente enthaltenden Bindemittelmischung im Feuerfestbereich als feuerfester Zement, feuerfester Mörtel, feuerfester Beton, feuerfeste Reparatur-, Spritzoder Stampfmasse,
   **dadurch gekennzeichnet, dass**

   a) eine sulfatträgerfreie, Tricalciumaluminat enthaltende Bindemittelkomponente und
   b) ein erstarrungs- und erhärtungsregelndes Zusatzmittel, das Calciumcarboaluminate als früheste Hydratphase auf der Oberfläche des Tricalciumaluminats bildet,

   verwendet werden.

2. Verwendung nach Anspruch 1,
   **dadurch gekennzeichnet, dass**
   das Zusatzmittel b) Alkaligluconat in Verbindung mit Alkalicarbonat und/oder Alkalibicarbonat ist.

3. Verwendung nach Anspruch 1 und/oder 2,
   **dadurch gekennzeichnet, dass**
   die Bindemittelkomponente zudem latenthydraulische und/ oder puzzolanische Bindemittel wie Hüttensandmehl und/oder Trassmehl und/oder Silicastaub enthält.

4. Verwendung nach Anspruch 1 oder 2 und/oder 3,
   **dadurch gekennzeichnet, dass**
   die Bindemittelkomponente der Bindemittelmischung normale Zementfeinheit aufweist.

5. Trockenmischung nach Anspruch 1 oder 2 und/ oder 3,
   **dadurch gekennzeichnet, dass**
   die Bindemittelkomponente der Bindemittelmischung feinst gemahlen ist und eine Feinstzement entsprechende Feinheit aufweist.

6. Trockenmischung nach einem der vorhergehenden Ansprüche,
   **dadurch gekennzeichnet, dass**
   als Zusatzstoffe bzw. Zuschlagstoffe zu der sulfatträgerfreien hydraulischen Bindemittelkomponente Quarzsand und/oder Schamottemehl und/oder Sillimanitmehl und/oder Disthenmehl und/oder Meta-Kaolinit und/oder Zeolithe und/oder inerte, feinemahlene Gesteinsmehle und/oder hydraulische Stoffe wie Calciumsilikate und/oder Calciumaluminate und/oder hydraulische Kalke enthalten sind.

7. Trockenmischung nach einem der vorhergehenden Ansprüche,
   **dadurch gekennzeichnet, dass**
   zur Beeinflussung der Wärmeleitfähigkeit der Einbettungs- bzw. Formmasse als Zuschlagsstoffe Siliciumnitrid, Siliciumcarbid, Nitride, Granate, Sinterkorund, Feldspäte oder andere anorganische Feststoffe mit einer hohen Wärmeleitfähigkeit enthalten sind.

8. Trockenmischung nach einem der vorhergehenden Ansprüche,
   **dadurch gekennzeichnet, dass**
   zur Beeinflussung der Wärmeleitfähigkeit Metallpartikel und/oder Metallgranulate und/oder Metallpulver enthalten sind.

9. Trockenmischung nach einem der vorhergehenden Ansprüche,
   **dadurch gekennzeichnet, dass**
   die Zusatzstoffe bzw. Zuschlagstoffe im Verhältnis 1:1 bis 1:3 in der Bindemittelmischung enthalten sind.

10. Trockenmischung nach einem der vorhergehenden Ansprüche,
    **dadurch gekennzeichnet, dass**
    Ausbrennstoffe vorhanden sind.

11. Trockenmischung nach Anspruch 10,
    **dadurch gekennzeichnet, dass**
    als Ausbrennstoffe Polypropylenfasern, Dolanitfasern, Kunststofffasern, Cellulosefasern, Holzmehl, Kunststoffgranulate, Tiermehl, Knochenmehl oder andere Ausbrennstoffe vorhanden sind, die beim Ausbrennen Poren und Kanälchen in der erhärteten Bindemittelmischung erzeugen.

12. Trockenmischung nach einem der vorhergehenden Ansprüche,
    **dadurch gekennzeichnet, dass**
    zur Verringerung der Benetzbarkeit Kohlenstoff in Form von fein verteiltem Ruß und/oder Graphit enthalten ist.

13. Trockenmischung nach einem der vorhergehenden Ansprüche,
    **dadurch gekennzeichnet, dass** als
    Zusatzmittel Erhärtungsbeschleuniger und/oder Erstarrungsverzögerer und/oder Fließmittel und/oder Stabilisierer enthalten sind.

14. Trockenmischung nach Anspruch 13,
    **dadurch gekennzeichnet, dass**
    als Fließmittel sulfonatgruppenfreie und/oder sulfonatgruppenhaltige Fließmittel enthalten sind.

15. Trockenmischung nach Anspruch 14,
    **dadurch gekennzeichnet, dass**
    als sulfonatgruppenfreie Fließmittel Stoffe aus der Gruppe der Polyasparaginsäuren und/oder Polyacrylate und/oder modifizierte Polycarboxylate enthalten sind, wobei die modifizierten Polycarboxylate homo- oder copolymere carboxylgruppenhaltige Monomere sind, deren Seitenketten modifiziert sind.

16. Trockenmischung nach Anspruch 15,
    **dadurch gekennzeichnet, dass**
    die Molmasse der Polycarboxylate zwischen 5000 und 50000 g/Mol liegt, wobei das sulfonatgruppenfreie Fließmittel, insbesondere in Mengen von 0,25 bis 2 M-% bezogen auf die Bindemittelkomponente vorhanden ist.

17. Trockenmischung nach Anspruch 14,
    **dadurch gekennzeichnet, dass**
    als sulfonatgruppenhaltige Fließmittel Ligninsulfonate, Sulfonseifen, Sulfonsäuren und weitere bekannte sulfonatgruppenhaltige Fließmittel enthalten sind.

18. Trockenmischung nach Anspruch 17,
    **dadurch gekennzeichnet, dass**
    als sulfonatgruppenhaltige Fließmittel Fließmittel mit einem erstarrungsverzögernden Effekt enthalten sind.

19. Trockenmischung nach einem der vorhergehenden Ansprüche,
    **dadurch gekennzeichnet, dass**
    Erhärtungs- und/oder Erstarrungsbeschleuniger enthalten sind.

20. Trockenmischung nach Anspruch 19,
    **dadurch gekennzeichnet, dass** als Beschleunigen Alkalicarbonate und/oder Alkalibicarbonate und/oder Calciumnitrat und/oder Alkalisilikate und/oder Alkalihydroxide und/oder Erdalkalihydroxide und/oder Chloride mehrwertiger Kationen und/oder Aminverbindungen und/oder Calciumformiat und/oder andere bekannte Beschleuniger oder Mischungen aus den genannten Beschleunigern enthalten sind.

21. Trockenmischung nach Anspruch 13,
    **dadurch gekennzeichnet, dass**
    ein Stabilisierer aus der Gruppe der mikrobiellen Polysaccharide enthalten ist.

22. Trockenmischung nach Anspruch 21,

**dadurch gekennzeichnet, dass**
als mikrobielles Polysaccharid ein synthetisches Biopolymer wie Xanthan oder Welan enthalten ist.

23. Trockenmischung nach einem der vorhergehenden Ansprüche,
**dadurch gekennzeichnet, dass**
als Erstarrungsverzögerer Cellulose, Ether und/oder Monound/oder Polysaccharide und/oder Acyrylsäure und deren Salze und/oder Oxycarbonsäuren und deren Salze und/oder Phosphorsäure und deren Salze und/oder Borsäure und deren Salze und/oder Alkylamid und/oder ein Styrol-Butadien enthalten sind.

24. Trockenmischung nach einem der vorhergehenden Ansprüche,
**dadurch gekennzeichnet, dass**
zur Erstarrungs- und Erhärtungsregelung Ligninsulfonat in Verbindung mit Alkalicarbonaten und/oder Alkalibicarbonaten enthalten sind.

25. Trockenmischung nach einem der vorhergehenden Ansprüche,
**dadurch gekennzeichnet, dass**
zur Erstarrungs- und Erhärtungsregelung Natrium- und Kaliumcarbonat in unterschiedlichen Mischungsverhältnissen enthalten sind.

26. Trockenmischung nach einem der vorhergehenden Ansprüche,
**dadurch gekennzeichnet, dass**
die Komponenten der Bindemittelmischung in trockenem Zustand zu einer Werktrockenmischung zusammengestellt, werkseitig vorgemischt enthalten sind.

27. Trockenmischung nach einem der vorhergehenden Ansprüche,
**dadurch gekennzeichnet, dass**
die Bindemittelkomponente abgestimmt auf eine gewünschte Frühfestigkeit und/oder Endfestigkeit und/oder Hydratationsgeschwindigkeit aus Fraktionen unterschiedlicher Korngröße bzw. -feinheit zusammengesetzt ist.

28. Trockenmischung nach einem der vorhergehenden Ansprüche,
**dadurch gekennzeichnet, dass**
alle Komponenten der Bindemittelmischung abgestimmt auf eine gewünschte Frühfestigkeit und/oder Endfestigkeit und/oder Hydratationsgeschwindigkeit und/oder Reaktionsgeschwindigkeit in unterschiedlichen Kornfeinheiten vorliegend zu einem einheitlichen stetigen und abgestuften Kornband zusammengesetzt enthalten sind.

29. Trockenmischung nach einem der vorhergehenden Ansprüche,
**dadurch gekennzeichnet, dass**
die Kornverteilung des trockenen Gemenges derart eingestellt ist, dass die Kornverteilung der folgenden Funktion nach Dinger und Funk

$$F(d) = \frac{D^n - D_s^{\,n}}{D_L^{\,n} - D_s^{\,n}}$$

entspricht, wobei der Exponent n kleiner 0,2 und insbesondere negativ ist.

30. Trockenmischung nach einem der vorhergehenden Ansprüche,
**dadurch gekennzeichnet, dass**
die Kornverteilung derart gewählt wird, dass eine Einbettungs- bzw. Formmasse mit maximal dichtem Gefüge erzielt wird.

31. Einbettungs- bzw. Formmasse hergestellt unter Verwendung einer Trockenmischung nach einem der Ansprüche 1 bis 30 und Wasser.

32. Einbettungs- bzw. Formmasse nach Anspruch 31,
**dadurch gekennzeichnet, dass**
der Wasserbindemittelwert nach dem Anmischen mit Wasser zwischen 0,3 und 0,8 liegt.

33. Gießform für den Metallguss aufweisend eine erhärtete Einbettungs- bzw. Formmasse nach Anspruch 31 oder 32.

34. Gussteil, hergestellt in einer Form nach Anspruch 33.